# EUROPÄISCHE PATENTSCHRIFT

(11) **EP 2 497 980 B1**
(45) Veröffentlichungstag und Bekanntmachung des Hinweises auf die Patenterteilung: **24.07.2013**
(21) Anmeldenummer: 12001402.2
(22) Anmeldetag: 01.03.2012
(51) Int. Cl.: F16K 5/20, F16K 5/06

(54) **Armatur**
Valve
Armature

(30) Priorität: 11.03.2011 DE 202011003806 U
(43) Veröffentlichungstag der Anmeldung: 12.09.2012
(73) Patentinhaber: Gebr. Kemper GmbH + Co. KG Metallwerke, 57462 Olpe (DE)
(72) Erfinder: Hilchenbach, Gerd, 57462 Olpe (DE)
(74) Vertreter: Grünecker, Kinkeldey, Stockmair & Schwanhäusser

(56) Entgegenhaltungen:
- DE-C1- 3 533 937
- DE-U1-202008 011 406
- FR-A- 785 155
- US-A- 2 719 022
- US-A- 5 469 889
- US-A- 5 507 314

## Beschreibung

Die vorliegende Erfindung betrifft eine Absperrarmatur mit einem Armaturengehäuse und einem Ventilkörper, der zum Schließen bzw. Öffnen der Absperrarmatur verschwenkbar um eine Schwenkachse in dem Armaturengehäuse gelagert ist und eine Dichtfläche nach Art eines Kugeloberflächensegmentes ausbildet.

Derartige Ventile werden üblicherweise als Kugelventile bezeichnet und haben einen kugelförmigen Ventilkörper, in dem eine Bohrung ausgespart ist, die in der geöffneten Stellung der Absperrarmatur mit Einlass- bzw. Auslassstutzen der Armatur fluchtet und sich in der geschlossenen Stellung quer zu diesen erstreckt. In der geschlossenen Stellung wird die Oberfläche des kugelförmigen Ventilkörpers dichtend an zumindest einen Stutzen üblicherweise unter Zwischenlage eines Dichtungsteiles angelegt. Üblicherweise erfolgt die Abdichtung gegenüber beiden Stutzen, so dass die vorbekannte Absperrarmatur richtungsunabhängig eingebaut und betrieben werden kann.

Ein wesentlicher Nachteil von Absperrarmaturen mit kugelförmigen Ventilkörpern besteht darin, dass nach einer gewissen Zeit des Nichtbetätigens die Armatur sehr schwergängig werden kann. Diese Schwergängigkeit resultiert daraus, dass der Ventilkörper zum Einen mit einer gewissen Vorspannung gegen die Dichtelemente in dem Armaturengehäuse angelegt werden muss, um die notwendige Dichtigkeit zu erreichen, was zu einer gewissen Reibung zwischen dem Armaturengehäuse und dem Ventilkörper führt. Zum Anderen können Ablagerungen nach einer Zeit des Nichtbetätigens zu einer Art Formschluss in der geschlossenen Stellung führen. Bei der Auslegung von vorbekannten Kugelhähnen ist dementsprechend darauf zu achten, dass die Vorspannung zur Abdichtung nicht zu groß gewählt wird, indes hinreichend groß, um die notwendige Abdichtung zu erzielen, jedoch nicht so groß, dass die Betätigungsmomente zum Öffnen bzw. zum Schließen der Absperrarmatur zu hoch werden.

Aus der EP 0 769 113 A1 ist ein Vorschlag bekannt, diesem Problem jedenfalls teilweise zu begegnen. Nach dem vorbekannten Vorschlag befindet sich in einem mehrteiligen Armaturengehäuse ein Ventilkörper, welches segmentkugelförmig ausgeformt ist und rechtwinklig zu der durch die Ventilstutzen gebildeten Längsachsen des Armaturengehäuses verschwenkbar gelagert ist. Die Verschwenkachse des Ventilkörpers ist dabei exzentrisch zu einer durch das Ventilgehäuse gebildeten und sich rechtwinklig zu der Längsachse des Ventilgehäuses erstreckenden Gehäusedrehachse ausgebildet und der Ventilkörper wird hierzu in zwei unterschiedlichen Ventilgehäuseteilen abgestützt. Alternativ kann die Drehachse einer Spindel zum Verschwenken des Ventilkörpers versetzt zu der Längsachse des Gehäuses vorgesehen sein. Durch die exzentrische Lagerung wird der Ventilkörper insbesondere am Ende der Schließbewegung in vermehrtem Maß an eine ringförmige Dichtfläche eines Dichtungsteiles, das in dem Gehäuse aufgenommen ist, angepresst.

Die aus der EP 0 769 113 A1 bekannte Lösung hat mehrere Nachteile. So führt das Ausformen einer exzentrischen Drehachse zu erhöhten Herstellungskosten. Die Bearbeitung des Ventilkörpers erfordert einen zusätzlichen Arbeitsgang bzw. eine zweite Aufspannung auf der Bearbeitungsmaschine. Darüber hinaus führt die exzentrische Lagerung schon während der Verschwenkbewegung zu größeren Reibkräften an der Berührungsfläche zwischen dem Dichtungsteil und dem Ventilkörper. Für Wartungsarbeiten ist es notwendig, zumindest ein Gehäuseteil des mehrteiligen Armaturengehäuses aus dem verrohrten Leitungssystem auszubauen, um auch den Ventilkörper aus dem Armaturengehäuse entnehmen zu können.

Weitere Beispiele für exzentrisch gelagerte Ventilkörper sind durch die FR 785 155 A, die US 2,719,022 A und das DE 20 2008 011 406 U1 gegeben.

Aus der DE 35 33 937 C1 ist eine Absperrarmatur mit einem Ventilkörper bekannt, der an einer Seite verschwenkbar an einem Ventilgehäuse gelagert ist und an der anderen Seite über einen Bolzen in einer Kulissenführung gesichert ist, die an einer Schaltstange ausgeformt ist. Die Schaltstange ist axial verschieblich in dem Ventilgehäuse gelagert, um das Ventil in an sich bekannter Weise durch Verschwenken in dem Gehäuse zu öffnen bzw. zu schließen. Aufgrund der Kulissenführung mit einer nach Art einer Wendel ausgeführten Nut, die in der Schaltstange ausgespart ist, ergibt sich dabei nicht nur eine Schwenkbewegung um eine Achse, sondern darüber hinaus auch eine Schwenkbewegung um eine andere Achse.

Die vorbekannte Lösung ist in der Herstellung aufwändig. Darüber hinaus kann die gewünschte erhöhte Dichtigkeit nur dann erreicht werden, wenn enge Fertigungstoleranzen eingehalten werden. Auch bei diesem Stand der Technik besteht das Problem eines erhöhten Widerstandes am Ende der Schließbewegung, wenn der Dichtkörper bereits dichtend an das Gehäuse angelegt ist, jedoch noch zusätzlich gegen diesen verspannt werden soll. Die DE 35 33 937 C1 versucht diesem Problem dadurch zu begegnen, dass der Dichtkörper mehrteilig mit einem lediglich randseitig abgestützten Ventilteller ausgeformt ist, dessen umbogener Umfangsrand wiederum eine Dichtleiste trägt, die mit dem Gehäuse zusammenwirkt. Die Konstruktion ist aufwändig und darüber hinaus aufgrund der Dichtleiste schadensanfällig.

Der vorliegenden Erfindung liegt das Problem zugrunde, eine verbesserte Absperrarmatur der gattungsgemäßen Art anzugeben. Dabei will die vorliegende Erfindung mit ihrem ersten Aspekt eine Absperrarmatur angeben, die eine hohe Dichtigkeit zeigt und darüber hinaus auch bei Zeiten längeren Nichtbenutzens leicht von der geschlossenen in die geöffnete Stellung bewegt werden kann. Mit ihrem zweiten Aspekt will die vorliegende Erfindung eine Absperrarmatur der gattungsgemäßen Art angeben, die Wartungs- bzw. Austauscharbeiten an dem Ventilkörper in besonders einfacher Weise ermöglicht. Weiterhin soll eine Absperrarmatur angegeben werden, bei der im Rahmen der Öffnungs- bzw. Schließbewegung Druckschläge verhindert werden.

Mit Blick auf den ersten Aspekt wird mit der vorliegenden Erfindung eine Absperrarmatur mit den Merkmalen von Anspruch 1 vorgeschlagen. Diese zeichnet sich durch einen Ventilkörper aus, der um eine andere Achse verschwenkbar ist, die sich rechtwinklig zu der Schwenkachse erstreckt. Die Schwenkbarkeit um die andere Schwenkachse und insbesondere die dazu notwendige Stellbewegung des Ventilkörpers sind dabei vorzugsweise derart, dass die Schwenkbewegung um die Schwenkachse zum Öffnen bzw. Verschließen der Absperrarmatur unabhängig zu der Schwenkbewegung um die andere Schwenkachse erfolgt. Ein hierzu vorgesehenes Stellelement wirkt vorzugsweise derart mit dem Ventilkörper zusammen, dass zunächst zumindest beim Stellen der Absperrarmatur in die geschlossene Stellung der Ventilkörper in diese geschlossene Stellung verschwenkt wird, hierbei vorzugsweise die Verschwenkbewegung durch einen Anschlag gestoppt wird, wobei in dieser Stellung noch nicht zwingend jeglicher Durchfluss durch die Armatur verhindert wird, und danach erst die Schwenkbewegung um die andere Schwenkachse erfolgt, über welche die dichtende Anlage zwischen dem Ventilkörper und dem Armaturengehäuse durch erhöhte Presskraft gesichert wird. Dabei liegt der Ventilkörper vorzugsweise in an sich bekannter Weise gegen ein gehäuseseitig eingebautes Dichtelement an, welches üblicherweise eine ringförmige Dichtfläche ausbildet.

Gemäß einer bevorzugten Weiterbildung der vorliegenden Erfindung ist ein Ventiloberteil mit einer Stellspindel vorgesehen, die mit einem Stellelement in spezifischer Weise zusammenwirkt. Die Zusammenwirkung ist dabei derart, dass im Zuge einer Stellbewegung der Stellspindel zum Schließen der Absperrarmatur zunächst der Ventilkörper um die Schwenkachse bis zu einem eine geschlossene Stellung vorgebenden Anschlag gestellt wird. Bei dieser Stellbewegung erfolgt üblicherweise keine Verschwenkbewegung um die andere Schwenkachse. Erst nach Erreichen des Anschlages und bei fortschreitender Stellbewegung der Stellspindel wird schließlich der Ventilkörper um die andere Schwenkachse zur angepressten Anlage des Ventilkörpers gegen das Armaturengehäuse gestellt. Die bevorzugte Weiterbildung erlaubt dementsprechend bei einer einheitlichen Bewegung der Stellspindel, üblicherweise durch Drehen an einem Betätigungsende der Stellspindel, ein vollständiges Verschließen der Absperrarmatur, wobei dieses Verschließen zweischrittig erfolgt. In dem ersten Schritt wird - in üblicher Weise - der Ventilkörper in dem Gehäuse um seine Schwenkachse verschwenkt, so dass die Dichtfläche des Ventilkörpers, die nach Art eines Kugeloberflächensegmentes ausgebildet ist, den zwischen den Stutzen ausgeformten Strömungsweg im Wesentlichen verlegt. Danach erfolgt ohne weitere Schwenkbewegung um die besagte Schwenkachse eine Schwenkbewegung um die andere Schwenkachse zur dichtenden Anlage des Ventilkörpers, d. h. des Kugeloberflächensegmentes gegen das Armaturengehäuse. Diese dichtende Anlage erfolgt üblicherweise gegen das besagte Dichtungselement.

Die oben beschriebene Kinematik des Ventilkörpers beim Überführen desselben in die Schließstellung - die für sich erfindungswesentlich ist - wird vorzugsweise bewirkt durch ein Ventiloberteil mit einem steigenden Stellelement, welches zur Vermittlung der Schwenkbewegung zum Schließen bzw. Öffnen formschlüssig in Bezug auf die Schwenkbewegung um die Achse dieser Schwenkbewegung mit dem Ventilkörper verbunden ist. Der Formschluss ist dabei üblicherweise spielfrei bzw. im Wesentlichen spielfrei. Des Weiteren bildet das Stellelement eine schräg zu der Schwenkachse angestellte Rampe aus, die zur Aufprägung der Schwenkbewegung um die andere Schwenkachse mit dem Ventilkörper zusammenwirkt. Das steigende Stellelement ist dabei vorzugsweise streng in Richtung der Schwenkachse linear beweglich und wird um diese Achse verschwenkt, um den Ventilkörper zu öffnen bzw. zu schließen, der am Ende dieser entsprechenden Bewegungen vorzugsweise jeweils mit einem zugeordneten Anschlag zusammenwirkt, d. h. gegen diesen anschlägt. Dementsprechend wird über den Formschluss auch nach Erreichen des Anschlages die weitere Verschwenkbewegung des Stellelementes unmöglich. Eine weitere Bewegung einer insbesondere mit dem Stellelement zusammenwirkenden, nicht steigend an dem Armaturengehäuse vorgesehene Spindel bewirkt dementsprechend zwangsläufig ein Steigen des Stellelementes. Aufgrund der schräg zur Schwenkachse angestellten Rampe führt dieses Steigen des Stellelementes zu einer Verschwenkbewegung um die andere Schwenkachse. Die Rampe kann dabei auch alternativ an dem Ventilkörper vorgesehen sein. Selbstverständlich ist es möglich, sowohl das Stellelement wie auch den Ventilkörper mit einer sich schräg zu der Schwenkachse erstreckenden Schrägfläche auszubilden, wobei die kooperierenden Schrägflächen die steigende Bewegung des Stellelementes in eine Schwenkbewegung des Ventilkörpers überführen.

Mit Blick auf den zweiten Aspekt schlägt die vorliegende Erfindung eine Absperrarmatur der gattungsgemäßen Art vor, die sich dadurch auszeichnet, dass der Ventilkörper im Wesentlichen C-förmig ausgebildet ist. Mit diesem Vorschlag kehrt sich die Erfindung von üblichen Vorschlägen ab, den Ventilkörper im Wesentlichen kugelförmig, d. h. im Wesentlichen rotationssymmetrisch zu der Schwenkachse auszubilden. Der Erfindung liegt vielmehr die Erkenntnis zugrunde, dass es für die geschlossene Stellung bei hinreichender Abdichtung zwischen dem Ventilkörper und dem Armaturengehäuse ausreicht, lediglich einen Stutzen des Armaturengehäuses durch den Ventilkörper abzudichten. Der C-förmige Ventilkörper bildet dabei auf mittlerer Höhe des Cs an seiner Außenseite das Kugeloberflächensegment aus, wohingegen auf der Innenseite des Cs ein Teil-Innenumfang ausgebildet wird, der dem Innenumfang des Strömungskanals innerhalb des Armaturengehäuses entspricht. Soweit zur Konkretisierung der erfindungsgemäßen Ausgestaltung des Ventilkörpers der Begriff "C-förmig" benutzt wird, erfolgt dies insbesondere mit Blick auf eine Längsschnittansicht des Ventilkörpers entlang der Schwenkachse. Da der Ventilkörper jedenfalls auch die Dichtfläche nach Art eines Kugeloberflächensegmentes ausformt, ergibt sich notwendigerweise, dass die C-Form am Außenumfang sphärisch geformt ist.

Die nebengeordnete Lösung der vorliegenden Erfindung hat ferner ein einteiliges Armaturengehäuse, welches eine Einbringöffnung für ein Ventiloberteil freilässt und diese ein Einbringöffnung in einem einteiligen Armaturengehäuse ausgespart ist. Der C-förmige Ventilkörper ist so dimensioniert, dass er aus der Einbringöffnung entnehmbar ist. Mit dieser Ausgestaltung ist danach die Möglichkeit geschaffen, den Ventilkörper auf einfache Weise im Rahmen von Wartungs- bzw. Austauscharbeiten aus dem Gehäuse zu entnehmen, ohne dass die Notwendigkeit besteht, die Armatur aus dem verrohrten Leitungssystem ganz oder teilweise auszubauen.

Tatsächlich ist der Ventilkörper in einer Querschnittsansicht vorzugsweise so ausgeformt, dass die den Innenumfang begrenzende Wandung des Ventilkörpers geradlinig verläuft, wohingegen die Außenumfangsfläche sphärisch und konvex ausgeformt ist. Die Breite in Umfangsrichtung, d. h. die Abmessung des Ventilkörpers entlang der Längsachse des Armaturengehäuses in geöffneter Stellung ist dabei so gewählt, dass die sphärische Außenfläche des Ventilkörpers gerade die von dem Armaturengehäuse respektive dem Dichtungselement vorgegebene ringförmige Dichtfläche abdeckt, zumindest in eine Erstreckung quer zur Schwenkachse und quer zur Längsachse des Gehäuses bei geschlossener Stellung des Ventilkörpers.

Aufgrund der C-förmigen Ausgestaltung ist es möglich, den Ventilkörper durch eine im Vergleich zu dem Stand der Technik kleine Einbringöffnung in das Armaturengehäuse einzubringen bzw. aus diesem zu entnehmen. Die Einbringöffnung ist dabei diejenige Öffnung, in welche ein Ventiloberteil in das Armaturengehäuse eingebracht wird. Das Ventiloberteil ist dabei mit dem Armaturengehäuse verschraubt. Die Verschraubung wird dabei insbesondere mit Blick auf eine kompakte Ausgestaltung unmittelbar in der Einbringöffnung verschraubt, die das Innengewinde zu einem an dem Ventiloberteil ausgebildeten Außengewinde ausformt.

Die C-förmige Ausgestaltung des Ventilkörpers ist dabei vorzugsweise so, dass an einem Ende des Ventilkörpers ein dem Ventiloberteil zugeordnetes Formschlusselement ausgeformt ist, vorzugsweise in Form einer Eingriffsöffnung für ein zapfenförmig ausgebildetes Stellelement, welches in die Einbringöffnung eingreift. An dem gegenüberliegenden Ende bildet der Ventilkörper einen Lagerzapfen und dazwischen die Dichtfläche aus. Der Lagerzapfen hat dabei vorzugsweise eine sphärische Oberfläche, insbesondere eine kugelsegmentförmige Oberfläche, die mit einer Gegenfläche zusammenwirkt, welche an dem Armaturengehäuse durch eine Lagerpfanne ausgebildet ist. Die Lagerpfanne befindet sich gegenüberliegend der Einbringöffnung für das Ventiloberteil.

Die C-förmige Ausgestaltung ist im Hinblick auf den Nenndurchmesser der Armatur, d. h. den Innendurchmesser im Bereich der Armaturenanschlüsse an die Rohrleitung in besonderer Weise ausgebildet. Bei der vorliegenden Erfindung kann die Einbringöffnung verhältnismäßig klein im Vergleich zu herkömmlichen Lösungen ausgebildet sein. So wird gemäß der vorliegenden Erfindung vorgeschlagen, die Einbringöffnung mit einem Durchmesser auszubilden, der nicht größer als 1,4 des Nenndurchmessers der Armaturenanschlüsse ist. Vorzugsweise ist der Durchmesser der Einbringöffnung nicht größer als 1,25 des Nenndurchmessers der Armaturenanschlüsse; besonders bevorzugt nicht größer als 1,15.

Mit Blick auf eine günstige Herstellung der Absperrarmatur ist das Stellelement und/oder der Ventilkörper aus Kunststoff ausgebildet. Dabei ist es auch möglich, insbesondere den Ventilkörper mit einer Kunststoffkomponente auszuformen, deren Härte so gewählt ist, dass auf ein gesondertes Dichtungselement, welches gehäuseseits vorgesehen ist, verzichtet werden kann. Der Ventilkörper kann auch mittels Mehrkomponenten-Spritzgießen hergestellt sein, um den unterschiedlichen Anforderungen nach Härte sowie möglichst leichtgängiger Lagerung im Bereich des Lagerzapfens einerseits und guter Abdichtung andererseits zu entsprechen. So sollte zumindest die sphärische Außenumfangsfläche des Ventilkörpers mit einer Komponente überzogen sein, die eine wesentlich geringere Härte hat als die Kunststoffkomponente, welche den Grundkörper des Ventilkörpers ausformt.

Sofern indes in an sich bekannter Weise die Abdichtung gegenüber dem Armaturengehäuse durch ein separates Dichtungselement, welches mit dem Armaturengehäuse verbunden ist, erfolgen soll, reicht nach der vorliegenden Erfindung vorzugsweise ein einziges in das Armaturengehäuse eingesetztes Dichtungselement, welches in der geschlossenen Stellung mit dem Ventilkörper zusammenwirkt.

Weitere Einzelheiten und Vorteile der vorliegenden Erfindung ergeben sich aus der nachfolgenden Beschreibung eines Ausführungsbeispiels in Verbindung mit der Zeichnung.

In dieser zeigen:
- Figur 1: eine Längsschnittansicht des Ausführungsbeispiels in geschlossener, jedoch noch nicht abgedichteter Stellung eines Ventilkörpers;
- Figur 2: eine Darstellung gemäß Figur 1 bei abgedichteter Stellung des Ventilkörpers;
- Figur 3: eine Querschnittsansicht parallel zur Längsachse der Armatur und entlang der Linie III-III gemäß Figur 1;

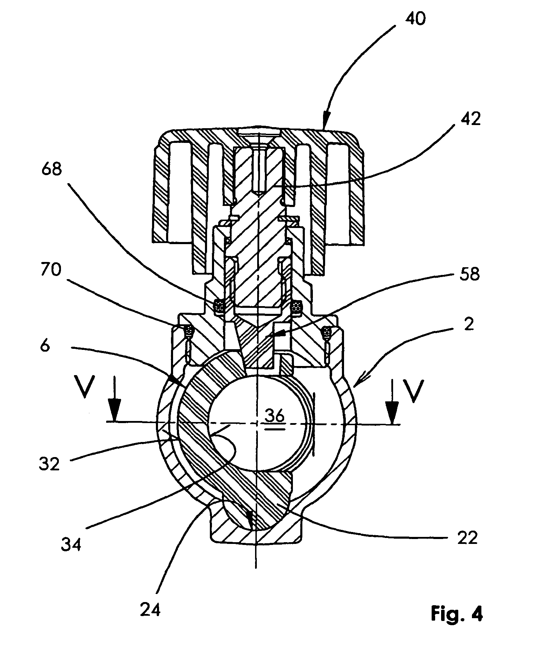

- Figur 4: eine Querschnittsansicht rechtwinklig zu der Längsachse der Absperrarmatur in geöffneter Stellung derselben;
- Figur 5: eine Querschnittsansicht entlang der Linie V-V gemäß Figur 4;
- Figur 6: eine Seitenansicht des Ventilkörpers des Ausführungsbeispiels;
- Figur 7: eine Draufsicht auf den Ventilkörper nach Figur 6;
- Figur 8: eine vergrößerte Seitenansicht eines Stellelementes des Ausführungsbeispiels; und
- Figur 9: eine Unteransicht des Stellelementes gemäß Figur 8.

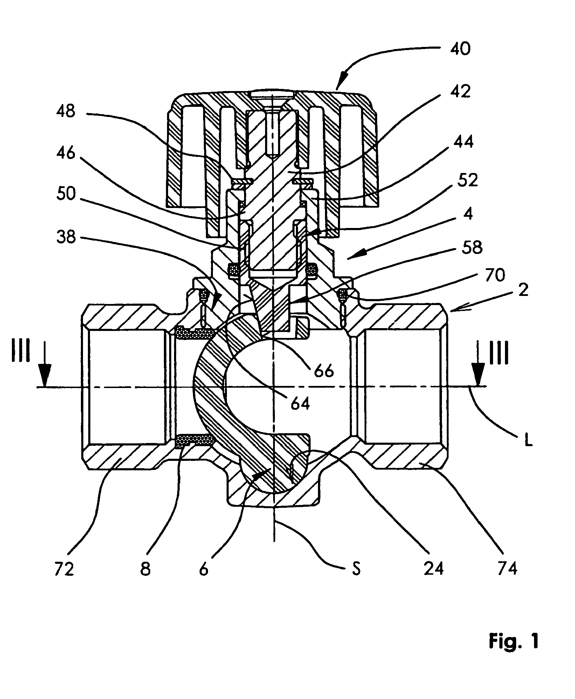

Die Figur 1 zeigt eine Längsschnittansicht entlang der Längsachse L der beispielhaft verdeutlichten Absperrarmatur, die als wesentliche Komponenten ein einteiliges Armaturengehäuse 2, ein darin eingeschraubtes Ventiloberteil 4, einen im Wesentlichen C-förmigen Ventilkörper 6 und ein Dichtungselement 8 umfasst, welches dichtend in das Armaturengehäuse 2 eingesetzt ist und bereits mit dem Ventilkörper 6 in der in Figur 1 gezeigten geschlossenen Stellung zusammenwirkt.

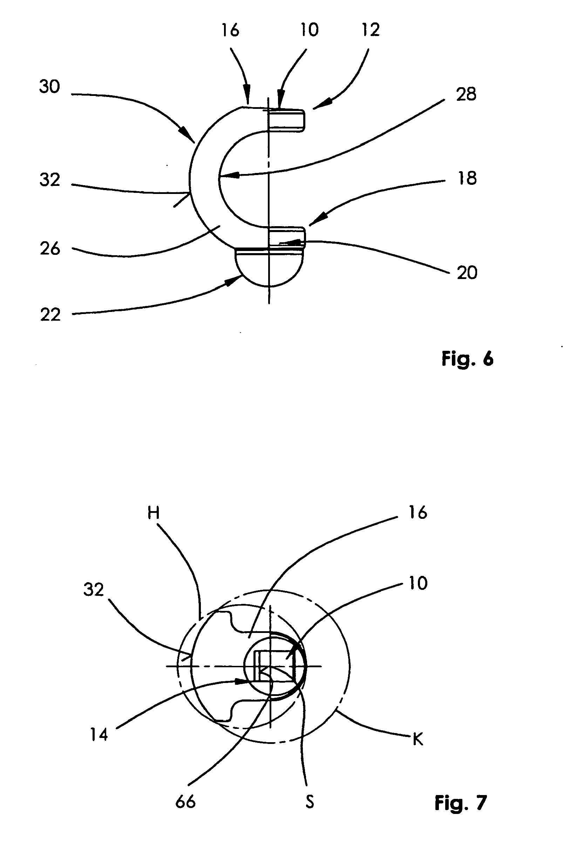

Das insbesondere in den Figuren 6 und 7 im Detail gezeigte Ventiloberteil 4 hat an seinem einen Ende eine Eingriffsöffnung 10 mit rechteckiger Grundfläche (vgl. Figur 7), die als Teil eines an dem einen Ende 12 vorgesehenen Auges 14 ausgeformt ist. Dieses Auge 14 wird durch einen sich im Wesentlichen parallel zu der Längsachse L erstreckenden Steg 16 des Ventilkörpers 6 ausgeformt.

An dem gegenüberliegenden Ende 18 bildet der Ventilkörper 6 in gleicher Weise einen Steg 20 aus, der an der Außenseite von einem halbkugelförmigen Lagerzapfen 22 überragt ist, der eine im Wesentlichen halbkugelförmige Außenumfangsfläche ausformt.

Korrespondierend hierzu bildet das Armaturengehäuse 2 eine Lagerpfanne 24 aus, in welcher der Lagerzapfen 22 nach Art eines Kugelgelenkes gehalten ist.

Zwischen den beiden Enden 12, 18 bildet der Ventilkörper 6 einen im Querschnitt ringförmigen Abschnitt 26 aus, der an der Innenseite einen konkaven Innenumfangsabschnitt 28 und an der Außenseite einen konvexen Außenumfangsabschnitt 30 ausformt.

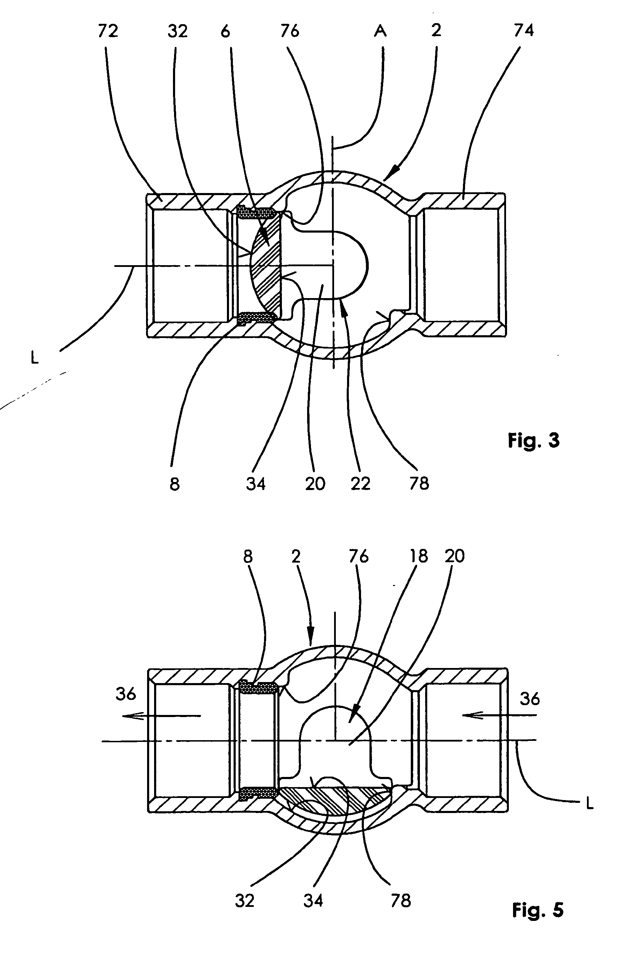

Wie die Figuren 3 und 5 verdeutlichen, ist der Außenumfangsabschnitt 30 zusätzlich in der anderen Richtung gekrümmt ausgebildet, d. h. ist sphärisch zur Ausformung einer kugeloberflächensegmentartigen Dichtfläche 32 ausgebildet, wohingegen der Innenumfangsabschnitt 28 geradlinig in den Querschnittsansichten parallel zur Längsachse L des Armaturengehäuses 2 mit geradlinig verlaufender Innenfläche 34 ausgebildet ist, um einen zylindrischen Strömungsdurchgang 36 durch das Armaturengehäuse 2 absatzfrei fortzusetzen.

Die Figur 7 verdeutlicht die Krümmung der Dichtfläche 32 in einer Querschnittsansicht rechtwinklig zu einer Schwenkachse S für den Ventilkörper 6. Zur Verdeutlichung der Krümmung ist die Dichtfläche 32 vervollständigt durch eine strichpunktierte Kreisfläche K eines Kreises, dessen Mittelpunkt auf der Schwenkachse S liegt. In Figur 7 ist des Weiteren ein Hüllfläche H eingezeichnet, welche den Ventilkörper 6 auf Höhe der Längsachse L, d. h. an seinem breitesten Punkt, einhüllt. Dieser Hüllfläche H entspricht der minimale Durchmesser einer Einbringöffnung 38, die an dem Armaturengehäuse 2 zum Einschrauben des Ventiloberteils 4 ausgespart ist.

Das Ventiloberteil 4 hat in an sich bekannter Weise ein Handrad 40, welches verdrehfest mit einer Stellspindel 42 verbunden ist. Diese Stellspindel 42 ist als nicht steigende Spindel in einem Ventiloberteilgehäuse 44 gelagert und in axialer Richtung über einen Kragen 46 und einen Sprengring 48 fixiert. An dem inneren Ende weist die Stellspindel 42 ein Außengewinde 50 auf, welches mit einem Stellelement 52 zusammenwirkt, das hierzu ein Innengewinde 54 hat.

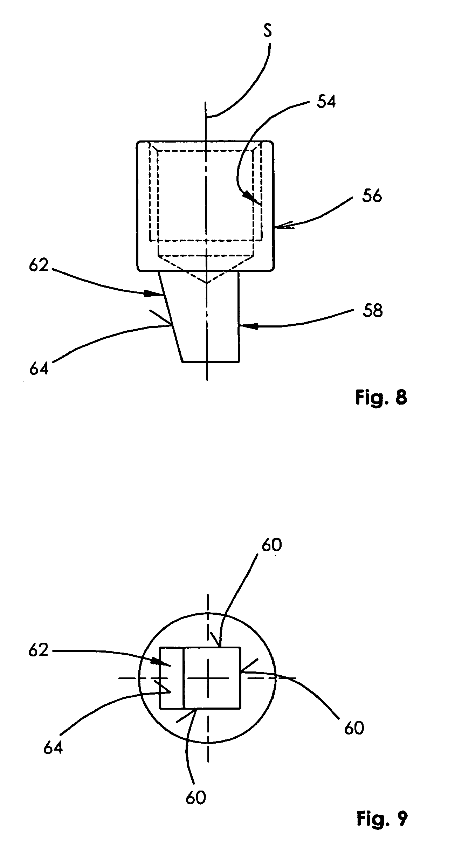

Einzelheiten dieses Stellelementes 52 sind in Figuren 8 und 9 dargestellt. Ein zu dem Ventiloberteil 4 gerichtetes Ende des Stellelementes 52 ist als Zylinderabschnitt 56 ausgeformt mit besagtem Innengewinde 54. An der Stirnseite dieses Zylinderabschnitts 56 befindet sich ein einheitlich an dem Stellelement 52 angeformtes Formschlusselement 58, welches mit rechteckiger Querschnittsfläche ausgeformt ist und drei jeweils parallel zu der Schwenkachse S ausgeformte Formschlussflächen 60 ausbildet und eine Rampe 62 hat, durch welche eine sich schräg zu der Schwenkachse S erstreckende Schrägfläche 64 ausgeformt ist, die zum freien Ende des Formschlusselementes 58 nach innen geneigt ist.

Korrespondierend hierzu und mit gleicher Neigung hat die Eingriffsöffnung 10 eine Gegenfläche 66. Diese Gegenfläche 66 ist mit gleicher Neigung relativ zu der Schwenkachse S ausgeformt wie die Schrägfläche 64. Die Schrägfläche 64 und die Gegenfläche 66 sind vorzugsweise mit einem Winkel von zwischen 10° und 20° vorzugsweise von zwischen 12° und 17° relativ zu der Schwenkachse S angestellt.

Über einen Dichtring 68 ist das Stellelement 52 dichtend in dem Ventiloberteilgehäuse 44 gehalten. Über einen weiteren Dichtring 70 ist das Ventiloberteilgehäuse 44 gegenüber dem Armaturengehäuse 2 abgedichtet.

Das Armaturengehäuse 2 weist in an sich bekannter Weise sich parallel zueinander erstreckende und den Strömungsdurchgang 36 fortsetzende Anschlussstutzen 72, 74 auf, die vorliegend mit Außengewinde zum Anschluss an ein Rohrleitungssystem ausgeformt sind. Dem Anschlussstutzen 72 ist das Dichtungselement 8 zugeordnet.

### Zum Betrieb der Absperrarmatur:

Figur 1 zeigt den geschlossenen Zustand, bei welchem der Ventilkörper 6 an einem ersten Anschlag 76 (vgl. Figur 3) anliegt, der die Verschwenkbewegung des Ventilkörpers 6 einseitig begrenzt. Figur 3 zeigt auch einen weiteren Anschlag 78, der die Verschwenkbewegung des Ventilkörpers 6 in die geöffnete Stellung begrenzt und die Offenstellung festlegt.

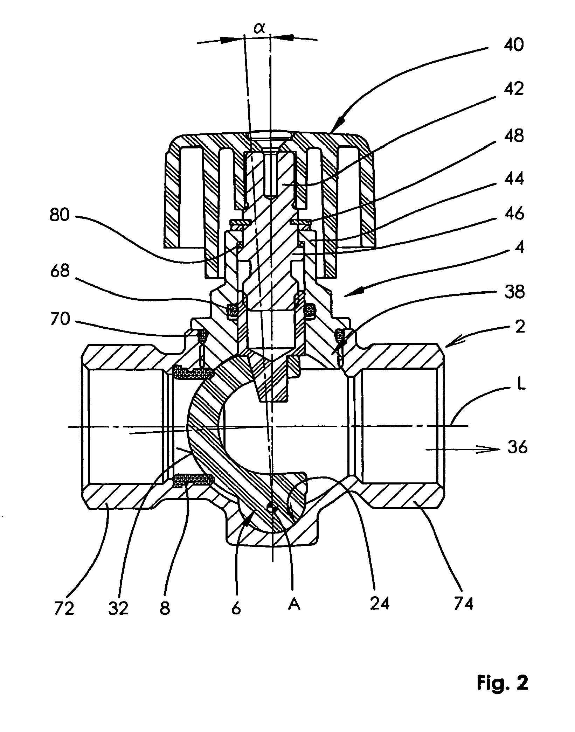

Diese Verschwenkbewegung wird durch Zusammenwirken der Formschlussflächen 16 mit den korrespondierend hierzu ausgebildeten und die Eingriffsöffnung 10 begrenzenden Gegenflächen vermittelt. Die Drehbewegung des Handrades 40 führt dementsprechend zunächst zu einer Drehbewegung der Stellspindel 42 und einer Drehbewegung des Stellelementes 52. Bei fortschreitender Drehbewegung der Stellspindel 42 und Anlage des Ventilkörpers 6 gegen den Anschlag 76 bei einer das Ventil verschließenden Drehbewegung am Handrad 40 wird eine weitere Drehbewegung des Stellelementes 52 durch die formschlüssige Anlage desselben in der Eingriffsöffnung 10 behindert. Dementsprechend steigt das Stellelement 52 in Richtung der Schwenkachse S. Dabei gleitet die Schrägfläche 74 an der Gegenfläche 66 vorbei. Aufgrund der Schrägstellung ergibt sich eine Verschwenkbewegung des Ventilkörpers 6 um eine Achse, die sich rechtwinklig zu der Längsachse L und rechtwinklig zu der Schwenkachse S erstreckt und damit rechtwinklig zu der Ansicht gemäß den Figuren 1 und 2 verläuft. Diese Achse ist in den Figuren 2 und 3 als andere Schwenkachse mit A gekennzeichnet. Durch die Schwenkbewegung um die andere Schwenkachse A ergibt sich eine weitere Verschwenkbewegung, die rechtwinklig zu der Verschwenkbewegung um die Schwenkachse S erfolgt. Infolge dieser Verschwenkbewegung um die andere Schwenkachse A wird der Ventilkörper 6 um die Lagerpfanne 24 in Richtung auf den Anschlussstutzen 72 verschwenkt und dementsprechend mit größerer Vorspannung gegen das Dichtungselement 6 angelegt.

Am Ende der Stellbewegung der Stellspindel 42 liegt das stirnseitige Ende des Zylinderabschnitts 56 auf der Oberseite des Steges 16 an. Dadurch ergibt sich für den Benutzer der Armatur ein sehr großer Widerstand, der gegen das Aufbringen eines weiteren Drehmomentes an dem Handrad 40 wirkt und dem Benutzer das vollständige Schließen der Armatur anzeigt. Durch die Verschwenkbewegung um die andere Achse A ist die Dichtfläche 32 nunmehr mit erheblicher Vorspannung gegen das Dichtungselement 8 angelegt und die Absperrarmatur sicher abgedichtet. Das gezeigte Ausführungsbeispiel ist derart ausgebildet, dass zwischen der in Figur 1 gezeigten Verschlussstellung nach reiner Verschwenkbewegung des Ventilkörpers 6 um die Schwenkachse S und der weiteren Schwenkbewegung um die andere Schwenkachse A infolge einer fortgesetzten Drehung des Handrades 40 der Ventilkörper 6 eine Verschwenkbewegung um den Winkel α = von zwischen 2° und 4° vollzogen hat.

Zum Öffnen wird das Handrad 40 in entgegengesetzter Richtung gedreht. Abhängig von der Zeit des Nichtbetätigens können sich zwischen dem Dichtungselement 8 und dem Ventilkörper 6 an der Dichtfläche 32 Ablagerungen gebildet haben, die das Ablösen der Dichtfläche 42 von dem Dichtungselement 8 erschwert bzw. zunächst vollkommen behindert. So ist insbesondere nach einer längeren Zeit des Nichtbetätigens damit zu rechnen, dass die Dichtfläche 32 an dem Dichtungselement 8 zunächst anhaftet. Eine Drehbewegung des Handrades 40 führt dementsprechend zunächst dazu, dass das Stellelement 52 in Richtung der Schwenkachse S wandert. Die Schrägfläche 64 gleitet an der Gegenfläche 66 vorbei, wodurch sich eine Schwenkbewegung um die andere Schwenkachse A ergibt. Die Dichtfläche 32 löst sich zunehmend von dem Dichtungselement 8 ab. Es wird davon ausgegangen, dass sich aufgrund des Wasserdrucks der Ventilkörper 6 zu jeder Zeit an dem Stellelement 52 abstützt, d. h. die Flächen 64, 66 aneinander anliegen. Infolge einer Verringerung der Haftung zwischen dem Dichtungselement 8 und dem Ventilkörper 6 zeigt dieser schließlich einen geringeren Widerstand gegen eine Schwenkbewegung um die Schwenkachse S und wird mit der Schwenkbewegung des Handrades 40 bzw. der Stellspindel 42 mitgenommen, um die in Figur 5 gezeigte geöffnete Stellung zu erreichen, in welcher der Ventilkörper 6 gegen den Anschlag 78 anliegt (Offenstellung). Die geradlinige Innenfläche 34 bildet in dieser Offenstellung den durch die Anschlussstutzen 72, 74 gebildeten Strömungsdurchgang 36 absatzfrei fort. Die der Innenfläche 34 gegenüberliegende und durch das Armaturengehäuse 2 ausgebildete Wandung kann ebenfalls parallel zu der Längsachse L geradlinig verlaufend ausgebildet sein, so dass sich eine relativ verlustarme Strömung durch die Absperrarmatur ergibt. In der Offenstellung ist das Handrad 40 so lange gedreht worden, bis der Kragen 46 gegen das freie Ende des Ventiloberteilgehäuses 44 unter Zwischenlage eines Dämpfungsringes 80 anliegt.

Bei dem konkret gezeigten Ausführungsbeispiel ist das Armaturengehäuse rotationssymmetrisch relativ zu der Schwenkachse S ausgebildet (vgl. Figuren 3, 5). Die besondere Ausgestaltung des Dichtungselementes 8 erlaubt es indes auch, eine dem Dichtungselement 8 in der Offenstellung (vgl. Figur 5) gegenüberliegende Wandung des Armaturengehäuses 2 die Innenwandungen der Anschlussstutzen 72, 74 im Wesentlichen geradlinig fortsetzend auszubilden. Bevorzugt wird insbesondere eine in Bezug auf die Schnittansicht nach Figur 5 symmetrischer Ausgestaltung, bei welcher die Innenfläche 34 korrespondierend zu einer gegenüberliegend hierzu durch das Armaturengehäuse 2 ausgebildeten Wandung des Gehäuses ausgeformt ist. Jedenfalls an der dem Ventilkörper 6 gegenüberliegenden Seite kann auf einen Einzug zwischen dem Anschlussstutzen 74 und dem mittleren Bereich des Armaturengehäuses 2 zur Verbindung des Strömungswiderstandes durch die Armatur verzichtet werden.

### Bezugszeichenliste

- 2: Armaturengehäuse
- 4: Ventiloberteil
- 6: Ventilkörper
- 8: Dichtungselement
- 10: Eingriffsöffnung
- 12: erstes Ende
- 14: Auge
- 16: Steg
- 18: zweites Ende
- 20: Steg
- 22: Lagerzapfen
- 24: Lagerpfanne
- 26: Ringabschnitt
- 28: Innenumfangsabschnitt
- 30: Außenumfangsabschnitt
- 32: Dichtfläche
- 34: Innenfläche
- 36: Strömungsdurchgang
- 38: Einbringöffnung
- 40: Handrad
- 42: Stellspindel
- 44: Ventiloberteilgehäuse
- 46: Kragen
- 48: Sprengring
- 50: Außengewinde
- 52: Stellelement
- 54: Innengewinde
- 56: Zylinderabschnitt
- 58: Formschlusselement
- 60: Formschlussfläche
- 62: Rampe
- 64: Schrägfläche
- 66: Gegenfläche
- 68: Dichtring
- 70: Dichtring
- 72: Anschlussstutzen
- 74: Anschlussstutzen
- 76: Anschlag, Schließstellung
- 78: Anschlag, Offenstellung
- 80: Dämpfungsring
- L: Längsachse
- S: Schwenkachse
- K: Kreisfläche
- H: Hüllfläche
- A: andere Schwenkachse
- α: Schwenkwinkel des Ventilkörpers um die andere Schwenkachse A zum Erreichen der vorgespannten Verschlussstellung

## Patentansprüche

1. Absperrarmatur mit einem Armaturengehäuse (2) und einem Ventilkörper (6), der zum Schließen bzw. Öffnen der Absperrarmatur verschwenkbar um eine Schwenkachse (S) in dem Armaturengehäuse (2) gelagert ist, der eine Dichtfläche (32) ausbildet und
um eine andere Schwenkachse (A), die sich rechtwinklig zu der Schwenkachse (S) erstreckt, verschwenkbar ist,
**dadurch gekennzeichnet, dass**
die Dichtfläche (32) nach Art eines Kugeloberflächensegmentes ausgebildet ist,
dass ein Ventiloberteil (4) mit einer Stellspindel (42), die mit einem Stellelement (52) zusammenwirkt, vorgesehen ist, und
dass das Stellelement (52) derart mit dem Ventilkörper (6) zusammenwirkt, dass im Zuge einer Stellbewegung der Stellspindel (42) zum Schließen der Absperrarmatur zunächst das Stellelement (52) und der Ventilkörper (6) um die Schwenkachse (S) bis zu einem eine geschlossene Stellung vorgegebenen Anschlag (76) bewegt werden und danach der Ventilkörper (6) erst bei fortschreitender Stellbewegung der Stellspindel (42) und durch Bewegung des Stellelementes (52) entlang der Schwenkachse (S) schließlich um die andere Schwenkachse (A) zur dichtenden Anlage des Ventilkörpers (6) gegen das Armaturengehäuse (2) gestellt wird.

2. Absperrarmatur nach Anspruch 1, **dadurch gekennzeichnet, dass** ein Ventiloberteil (4) mit einem steigenden Stellelement (52), welches zur Vermittlung der Schwenkbewegung zum Schließen bzw. Öffnen formschlüssig mit dem Ventilkörper (6) verbunden ist und dass das Stellelement (52) oder der Ventilkörper (6) eine schräg zur Schwenkachse (S) angestellte Rampe (62) ausformt, die derart ausgebildet ist, dass eine steigende Bewegung des Stellelementes (52) dem Ventilkörper (6) die Schwenkbewegung um die andere Schwenkachse (A) aufprägt.

3. Absperrarmatur nach Anspruch 1 oder 2, **dadurch gekennzeichnet, dass** der Ventilkörper (6) im Wesentlichen C-förmig ausgebildet ist und so dimensioniert ist, dass er aus einer Einbringöffnung (38) des einteiligen Armaturengehäuses (2) zur Aufnahme eines Ventiloberteils (4) entnehmbar ist.

4. Absperrarmatur nach Anspruch 3, **dadurch gekennzeichnet, dass** der Ventilkörper (6) an einem Ende ein dem Ventiloberteil (4) zugeordnetes Formschlusselement (58), an seinem gegenüberliegenden Ende einen Lagerzapfen (22) und dazwischen die Dichtfläche (32) ausbildet.

5. Absperrarmatur nach Anspruch 3 oder 4, **dadurch gekennzeichnet, dass** der Lagerzapfen (22) eine sphärische Oberfläche aufweist, die an einer mit korrespondierender Gegenfläche (66) an dem Armaturengehäuse (2) ausgebildeten Lagerpfanne (24) anliegt.

6. Absperrarmatur nach einem der vorherigen Ansprüche, **dadurch gekennzeichnet, dass** das Armaturengehäuse (2) einteilig ausgebildet ist und ein Ventiloberteil (4) in einer durch das Armaturengehäuse (2) ausgebildeten Einbringöffnung (38) im Gewindeeingriff ist, deren Durchmesser nicht größer als 1,4, vorzugsweise nicht größer als 1,25 und besonders bevorzugt nicht größer als 1,15 des Nenndurchmessers von Absperrarmaturanschlüssen (72, 74) an eine Rohrleitung ist.

7. Absperrarmatur nach einem der vorherigen Ansprüche, **dadurch gekennzeichnet, dass** das Stellelement (52) und/oder der Ventilkörper (6) aus Kunststoff gebildet ist.

8. Absperrarmatur nach einem der vorherigen Ansprüche, **gekennzeichnet durch** ein in das Armaturengehäuse (2) eingesetztes und in der geschlossenen Stellung dichtend an dem Ventilkörper (6) anliegendes Dichtungselement (8).

## Claims

1. Stop valve having a valve housing (2) and a valve body (2), which for closing and opening the stop valve is mounted so as to pivot about a pivot axis (S) in the valve housing (2), which forms a sealing surface (32) and can be pivoted about another pivot axis (A) which extends at a right angle to the pivot axis (S),
**characterised in that**
the sealing surface (32) is designed in the manner of a segment of a surface of a sphere,
**in that** a valve upper part (4) is provided with an adjusting spindle (42) which cooperates with an positioning element (52), and
**in that** the adjusting element (52) cooperates with the valve body (2) in such a way that during the course of a positioning movement of the adjusting spindle (42) to close the stop valve, firstly the adjusting element (52) and the valve body (2) are moved about the pivot axis (S) up a stop (76) predefining a closed position and then the valve body (2), only with progressive positioning movement of the adjusting spindle (42) and due to movement of the positioning element (52) along the pivot axis (S), is finally positioned about the other pivot axis (A) for sealing abutment of the valve body (2) against the valve housing (2).

2. Stop valve according to claim 1, **characterised in that** a valve upper part (4) with a rising positioning element (52) is positively connected to the valve body (2) for imparting the pivoting movement for closing or opening, and **in that** the positioning element (52) or the valve body (2) forms a ramp (62) which is employed inclined to the pivot axis (S) and which is designed in such a way that a rising movement of the positioning element (52) impresses the pivot movement about the other pivot axis (A) on the valve body (2).

3. Stop valve according to claim 1 or 2, **characterised in that** the valve body (2) is substantially designed in a C shape and is dimensioned such that it can be removed from an insertion opening (38) of the one-piece valve housing (2) to receive a valve upper part (4).

4. Stop valve according to claim 3, **characterised in that** at one end the valve body (2) forms a positive-locking element (58) associated with the valve upper part (4), and at its opposing end forms a bearing pin (22) and the sealing surface (32) therebetween.

5. Stop valve according to claim 3 or 4, **characterised in that** the bearing pin (22) has a spherical surface which rests on a bearing seat (24) constructed with corresponding counter surface (66) on the valve housing (2).

6. Stop valve according to any one of the preceding claims, **characterised in that** the valve housing (2) is constructed in one piece and a valve upper part (4) is in thread engagement in an insertion opening (38) formed through the valve housing (2), the diameter of which opening is not greater than 1.4, preferably not greater than 1.25 and particularly preferably not greater than 1.15 of the nominal diameter of stop valve connections (72, 74) to a pipe.

7. Stop valve according to any one of the preceding claims, **characterised in that** the positioning element (52) and/or the valve body (2) is/are formed from plastic material.

8. Stop valve according to any one of the preceding claims, **characterised by** a sealing element (8) which is inserted into the valve housing (2) and which in the closed position rests on the valve body (2) in a sealing manner.

## Revendications

1. Vanne d'arrêt avec un boîtier de vanne (2) et un corps de vanne (6) qui est monté de façon pivotante autour d'un axe de pivotement (S) dans le boîtier de vanne (2) pour fermer et ouvrir la vanne d'arrêt, constitue une surface d'étanchéité (32), et peut pivoter autour d'un autre axe de pivotement (A) qui s'étend perpendiculairement à l'axe de pivotement (S),
**caractérisée**
**en ce que** la surface d'étanchéité (32) est constituée sous forme d'un segment de surface sphérique,
**en ce qu'**une partie de vanne supérieure (4) est pourvue d'une broche de réglage (42) qui coopère avec un élément de réglage (52), et
**en ce que** l'élément de réglage (52) coopère avec le corps de vanne (6) de telle sorte que, lors d'un déplacement de réglage de la broche de réglage (42) pour fermer la vanne d'arrêt, l'élément de réglage (52) et le corps de vanne (6) sont premièrement déplacés autour de l'axe de pivotement (S) jusqu'à une butée (76) prédéfinie par une position fermée, et le corps de vanne (6) est deuxièmement positionné d'abord par un déplacement de réglage d'avancement de la broche de réglage (42) et par un déplacement de l'élément de réglage (52) le long de l'axe de pivotement (S), et finalement autour de l'autre axe de pivotement (A) pour une application étanche du corps de vanne (6) contre le boîtier de vanne (2).

2. Vanne d'arrêt selon la revendication 1, **caractérisée en ce qu'**une partie de vanne supérieure (4)
comporte un élément de réglage montant (52) qui est connecté par engagement de forme au corps de vanne (6) pour procurer le mouvement de pivotement de fermeture ou d'ouverture, et **en ce que** l'élément de réglage (52) ou le corps de vanne (6) forme une rampe (62) agencée en oblique par rapport à l'axe de pivotement (S), constituée de telle sorte qu'un déplacement montant de l'élément de réglage (52) applique au corps de vanne (6) le mouvement de pivotement autour de l'autre axe de pivotement (A).

3. Vanne d'arrêt selon la revendication 1 ou 2, **caractérisée en ce que** le corps de vanne (6) présente essentiellement une forme en C et est dimensionné de telle sorte qu'il peut être extrait par une ouverture d'introduction (38) du boîtier de vanne (2) constitué d'une seule pièce pour démonter une partie de vanne supérieure (4).

4. Vanne d'arrêt selon la revendication 3, **caractérisée en ce que** le corps de vanne (6) constitue à une extrémité un élément d'engagement de forme (58) associé à la partie de vanne supérieure (4), à son extrémité opposée un pivot (22), et entre lesdites extrémités la surface d'étanchéité (32).

5. Vanne d'arrêt selon la revendication 3 ou 4, **caractérisée en ce que** le pivot (22) comporte une surface sphérique qui est appliquée contre une cuvette de support (24) constituée avec une surface d'accouplement correspondante (66) sur le boîtier de vanne (2).

6. Vanne d'arrêt selon l'une des revendications précédentes, **caractérisée en ce que** le boîtier de vanne (2) est constitué d'une seule pièce, et **en ce qu'**une partie de vanne supérieure (4) est engagée par filetage dans une ouverture d'introduction (38) constituée dans le boîtier de vanne (2), dont le diamètre est inférieur ou égal à 1,4, préférablement inférieur ou égal à 1,25, et préférablement encore inférieur ou égal à 1,15 fois le diamètre nominal des connexions (72, 74) de la vanne d'arrêt sur une conduite.

7. Vanne d'arrêt selon l'une des revendications précédentes, **caractérisée en ce que** l'élément de réglage (52) et/ou le corps de vanne (6) sont constitués en matière plastique.

8. Vanne d'arrêt selon l'une des revendications précédentes, **caractérisée par** un élément d'étanchéité (8) inséré dans le boîtier de vanne (2) et appuyé contre le corps de vanne (6) de manière à procurer une étanchéité en position fermée.
